# EUROPÄISCHE PATENTSCHRIFT

(11) **EP 3 043 954 B1**
(45) Veröffentlichungstag und Bekanntmachung des Hinweises auf die Patenterteilung: **06.03.2019**
(21) Anmeldenummer: 14753264.2
(22) Anmeldetag: 22.08.2014
(51) Int. Cl.: B23Q 1/00

(54) **SPANNVORRICHTUNG ZUM EINSPANNEN MINDESTENS EINES SPANNNIPPELS**
CLAMPING DEVICE FOR CLAMPING AT LEAST ONE CLAMPING NIPPLE
DISPOSITIF DE SERRAGE D'AU MOINS UN TÉTON DE SERRAGE

(30) Priorität: 10.09.2013 DE 102013218050
(43) Veröffentlichungstag der Anmeldung: 20.07.2016
(73) Patentinhaber: Andreas Maier GmbH & Co. KG, 70734 Fellbach (DE)
(72) Erfinder: ZIMMERMANN, Rainer, 73732 Esslingen (DE); STEINBACH, Peter, 71642 Ludwigsburg (DE); GÖBEL, Volker, 70563 Stuttgart (DE)
(74) Vertreter: Hoeger, Stellrecht & Partner Patentanwälte mbB
(86) Internationale Anmeldenummer: PCT/EP2014/067889
(87) Internationale Veröffentlichungsnummer: WO 2015/036219

(56) Entgegenhaltungen:
- EP-A1- 1 402 995
- DE-A1-102005 043 751
- DE-A1-102011 002 332
- DE-U1-202010 010 413

## Beschreibung

Die vorliegende Erfindung betrifft eine Spannvorrichtung zum Einspannen mindestens eines Spannnippels einer Werkstückpalette oder eines Werkstücks, wobei die Spannvorrichtung eine Arretiervorrichtung zum Arretieren des Spannnippels in einer Spannnippelaufnahme der Spannvorrichtung umfasst.

Spannvorrichtungen dieser Art sind insbesondere auch unter der Bezeichnung "Schnellspannzylinder" oder "Nullpunktspannvorrichtung" bekannt.

Bei bekannten Vorrichtungen dieser Art umfasst die Arretiervorrichtung einen verschieblichen Kolben, der mit einem unter Druck stehenden Fluid beaufschlagbar ist, und mehrere Arretierkörper, insbesondere Arretierkugeln, die durch Verschieben des Kolbens in eine Arretierstellung bringbar sind, in welcher die Arretierkörper den Spannnippel in der Spannnippelaufnahme arretieren. Bei dem Fluid kann es sich insbesondere um ein Pneumatikfluid, beispielsweise Druckluft, oder um ein Hydraulikfluid, beispielsweise ein Hydrauliköl, handeln. Die Arretiervorrichtung kann ferner ein elastisches Rückstellelement, beispielsweise ein Federelement, zum Vorspannen des Kolbens in die Arretierstellung umfassen.

Solche Spannvorrichtungen sind wegen der Notwendigkeit der Zufuhr und Abfuhr des unter Druck stehenden Fluids aufwändig aufgebaut und können ferner nur dort betrieben werden, wo ein solches unter Druck stehendes Fluid verfügbar ist.

Ferner sind Spannvorrichtungen bekannt, bei denen ein Spannelement in einer Radialrichtung des Spannnippels auf den Spannnippel zu bewegt wird, um das Spannelement in Eingriff mit dem Spannnippel zu bringen und den Spannnippel hierdurch in der Spannnippelaufnahme zu arretieren. Hierbei ist von Nachteil, dass der Spannnippel sich im arretierten Zustand im Verschiebeweg des Spannelements befindet, so dass die maximale Verschiebestrecke des Spannelements begrenzt ist und im arretierten Zustand stets ein freies Ende des Spannelements in Eingriff mit dem Spannnippel stehen muss.

Die DE 10 2011 002332 A1 offenbart eine Spannvorrichtung gemäß dem Oberbegriff von Anspruch 1.

Der vorliegenden Erfindung liegt die Aufgabe zugrunde, eine Spannvorrichtung der eingangs genannten Art zu schaffen, welche einfach aufgebaut ist und dennoch eine zuverlässige Arretierung des Spannnippels mit hoher Haltekraft ermöglicht.

Diese Aufgabe wird durch eine Spannvorrichtung nach Anspruch 1 gelöst.

Der vorliegenden Erfindung liegt das Konzept zugrunde, die Arretiervorrichtung der Spannvorrichtung so auszubilden, dass das mindestens eine Spannelement längs einer gegenüber der Radialrichtung des zugeordneten Spannnippels seitlich versetzten Bewegungsbahn von der Freigabestellung in die Arretierstellung und/oder von der Arretierstellung in die Freigabestellung bewegbar ist, so dass der Spannnippel in seinem arretierten Zustand den Verschiebeweg des Spannelements nicht blockiert und das Spannelement sich in der Arretierstellung und/oder in der Freigabestellung beliebig weit seitlich an dem Spannnippel und/oder an der Spannnippelaufnahme vorbei erstrecken kann.

Der Spannbereich des Spannelements muss daher nicht an einem dem Spannnippel im arretierten Zustand zugewandten freien Ende des Spannelements angeordnet sein; vielmehr ist es möglich, den Spannbereich an einer beliebigen Stelle zwischen den Enden des Spannelements vorzusehen.

Das Spannelement kann somit insbesondere in seiner Arretierstellung an verschiedenen Bereichen, welche in einer Längsrichtung des Spannelements vor beziehungsweise hinter dem Spannbereich liegen, zur Kraftübertragung mit anderen Elementen der Spannvorrichtung, insbesondere mit einem Grundkörper oder einem Gehäuse der Spannvorrichtung, in Kontakt stehen, so dass insbesondere in der Arretierstellung des Spannelements hohe Haltekräfte zwischen dem Spannnippel und dem Grundkörper oder dem Gehäuse der Spannvorrichtung über das Spannelement übertragbar sind.

Das mindestens eine Spannelement kann insbesondere als ein Spannbolzen ausgebildet sein.

Bei einer bevorzugten Ausgestaltung der Erfindung ist vorgesehen, dass die Bewegungsvorrichtung ein mechanisches Betätigungselement umfasst, mittels welchem die Bewegung des mindestens einen Spannelements von außerhalb der Spannvorrichtung antreibbar ist.

Ein in dieser Weise mechanisch, beispielsweise durch das Angreifen eines Betätigungswerkzeugs, insbesondere eines Schraubenschlüssels oder eines Innenmehrkantschlüssels, betätigbare Spannvorrichtung benötigt keine Zufuhr von unter Druck stehendem Fluid, so dass eine solche Spannvorrichtung überall ohne aufwändige Vorarbeiten einsetzbar ist.

Ferner verbleibt die mechanisch betätigte Spannvorrichtung ohne eine Einwirkung von außerhalb der Spannvorrichtung vorzugsweise stabil in ihrem gespannten Zustand, in welchem das mindestens eine Spannelement sich in der Arretierstellung befindet, oder in ihrem geöffneten Zustand, in welchem das mindestens eine Spannelement sich in der Freigabestellung befindet, so dass kein Rückstellelement zum Vorspannen des Spannelements in die Arretierstellung erforderlich ist und somit auch eine Fehlfunktion der Spannvorrichtung im Falle des Versagens eines solchen Rückstellelements ausgeschlossen ist.

Bei einer bevorzugten Ausgestaltung der Erfindung ist vorgesehen, dass die Bewegungsvorrichtung ein drehbares Betätigungselement umfasst, durch dessen Drehung die Bewegung des mindestens einen Spannelements antreibbar ist.

Die Bewegungsvorrichtung der Arretierungsvorrichtung kann insbesondere ein Getriebe zum Umwandeln einer Drehbewegung in eine Linearbewegung des mindestens einen Spannelements umfassen.

Ein solches Getriebe kann beispielsweise eine Gewindespindel umfassen.

Bei einer bevorzugten Ausgestaltung der Erfindung ist vorgesehen, dass die Bewegungsvorrichtung ein Mitnehmerelement zum synchronen Bewegen von zwei oder mehr, insbesondere von drei oder mehr, besonders bevorzugt von vier oder mehr, Spannelementen umfasst.

Eine besonders sichere Arretierung des Spannnippels in der zugeordneten Spannnippelaufnahme wird erreicht, wenn jeder Spannnippelaufnahme jeweils mindestens zwei Spannelemente so zugeordnet sind, dass in der Arretierstellung der Spannelemente Spannbereiche beider Spannelemente in die jeweilige Spannnippelaufnahme eingreifen.

Dabei kann insbesondere vorgesehen sein, dass die Spannbereiche der Spannelemente in der Arretierstellung der Spannelemente auf einander entgegengesetzten Seiten des in der Spannnippelaufnahme aufgenommenen Spannnippels angeordnet sind.

Wenn die Spannvorrichtung mehrere Spannnippelaufnahmen umfasst, wird ein besonders effizienter Aufbau der Spannvorrichtung erzielt, wenn mindestens ein Spannelement mindestens zwei Spannbereiche aufweist, die in der Arretierstellung des Spannelements in zwei verschiedene Spannnippelaufnahmen eingreifen.

Um den Spannnippel im geöffneten Zustand der Spannvorrichtung besonders leicht aus der Spannnippelaufnahme entnehmen zu können, ist es günstig, wenn mindestens ein Spannelement mindestens eine Ausnehmung aufweist, welche benachbart zu einem Spannbereich des Spannelements angeordnet ist und in der Freigabestellung des Spannelements im Bereich der jeweils zugeordneten Spannnippelaufnahme angeordnet ist.

Dabei kann insbesondere vorgesehen sein, dass die Ausnehmung sich ringförmig um das Spannelement herum erstreckt.

Insbesondere kann vorgesehen sein, dass die Ausnehmung an einem Abschnitt des Spannelements mit verringertem Durchmesser vorgesehen ist.

Der Abschnitt verringerten Durchmessers kann insbesondere im Wesentlichen rotationssymmetrisch in Bezug auf eine Längsachse des Spannelements ausgebildet sein, was eine besonders einfache Fertigung des Spannelements ermöglicht.

Wenn die Spannvorrichtung mehrere Spannnippelaufnahmen aufweist, so ist es günstig, wenn mindestens ein Spannelement mindestens zwei Ausnehmungen aufweist, welche benachbart zu jeweils einem Spannbereich des Spannelements angeordnet sind und in der Freigabestellung des Spannelements im Bereich der jeweils zugeordneten Spannnippelaufnahme angeordnet sind.

Die Arretiervorrichtung der erfindungsgemäßen Spannvorrichtung umfasst vorzugsweise zwei oder mehr, insbesondere drei oder mehr, besonders bevorzugt vier oder mehr, Spannelemente, deren Arretierrichtungen im Wesentlichen parallel zueinander ausgerichtet sind.

Bei einer bevorzugten Ausgestaltung der Erfindung ist vorgesehen, dass mindestens ein Spannelement mindestens einen Führungsabschnitt umfasst, der in einem Führungskanal der Spannvorrichtung, insbesondere eines Gehäuses der Spannvorrichtung, geführt ist. Über einen solchen Führungsabschnitt können besonders hohe Haltekräfte zwischen einem Grundkörper oder Gehäuse der Spannvorrichtung und dem Spannnippel über das Spannelement übertragen werden.

Besonders günstig ist es, wenn mindestens ein Spannbereich mindestens eines Spannelements zwischen einem Führungsabschnitt des Spannelements und einem Mitnehmerabschnitt des Spannelements, an welchem ein Mitnehmerelement der Bewegungsvorrichtung an dem Spannelement angreift, angeordnet ist. Hierdurch ist das Spannelement sowohl auf der einen Seite des Spannbereichs (durch den in dem Führungskanal der Spannvorrichtung geführten Führungsabschnitt) als auch auf der anderen, gegenüberliegenden Seite des Spannbereichs (durch das Mitnehmerelement der Bewegungsvorrichtung) abgestützt, so dass das Spannelement in der Arretierstellung besonders große Kräfte aufnehmen kann.

Vorzugsweise ist vorgesehen, dass eine Projektion des Spannbereichs des Spannelements längs der Arretierrichtung und/oder längs der Freigaberichtung eine Mittelachse des jeweils zugeordneten Spannnippels im arretierten Zustand und/oder eine Mittelachse der jeweils zugeordneten Spannnippelaufnahme nicht schneidet.

Besonders bevorzugt ist es, wenn eine Projektion des ganzen Spannelements längs der Arretierrichtung und/oder längs der Freigaberichtung die Mittelachse des jeweils zugeordneten Spannnippels im arretierten Zustand und/oder die Mittelachse der jeweils zugeordneten Spannnippelaufnahme nicht schneidet.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine perspektivische Darstellung einer ersten Ausführungsform einer Spannvorrichtung zum Einspannen eines Spannnippels, wobei ein Spannnippel in einer Spannnippelaufnahme der Spannvorrichtung aufgenommen ist;
- Fig. 2: eine weitere perspektivische Darstellung der Spannvorrichtung mit in der Spannnippelaufnahme aufgenommenem Spannnippel, mit Blick auf eine einem Betätigungselement einer Bewegungsvorrichtung der Spannvorrichtung gegenüberliegende Seite der Spannvorrichtung;
- Fig. 3: eine Draufsicht von oben auf die Spannvorrichtung mit in der Spannnippelaufnahme aufgenommenem Spannnippel aus den Fig. 1 und 2;
- Fig. 4: eine Draufsicht von unten auf die Spannvorrichtung aus den Fig. 1 bis 3;
- Fig. 5: eine Seitenansicht der Spannvorrichtung mit in der Spannnippelaufnahme aufgenommenem Spannnippel aus den Fig. 1 bis 4, mit Blick auf das Betätigungselement der Bewegungsvorrichtung der Spannvorrichtung, längs des Pfeiles 5 in Fig. 3;
- Fig. 6: eine Seitenansicht der Spannvorrichtung mit aus der Spannnippelaufnahme entnommenem Spannnippel;
- Fig. 7: einen vertikalen Schnitt durch die Spannvorrichtung im geöffneten Zustand und einen über der Spannnippelaufnahme der Spannvorrichtung angeordneten Spannnippel, wobei die Spannvorrichtung sich im geöffneten Zustand befindet;
- Fig. 8: einen vertikalen Schnitt durch die Spannvorrichtung und einen in der Spannnippelaufnahme aufgenommenen Spannnippel, wobei die Spannvorrichtung sich in ihrem gespannten Zustand befindet;
- Fig. 9: einen horizontalen Schnitt durch die Spannvorrichtung im geöffneten Zustand, wobei zwei Spannbolzen der Spannvorrichtung sich in ihrer Freigabestellung befinden;
- Fig. 10: einen der Fig. 9 entsprechenden horizontalen Schnitt durch die Spannvorrichtung und einen in der Spannnippelaufnahme aufgenommenen Spannnippel im gespannten Zustand der Spannvorrichtung, wobei die Spannbolzen der Spannvorrichtung sich in ihrer Arretierstellung befinden;
- Fig. 11: eine perspektivische Darstellung einer zweiten Ausführungsform einer Spannvorrichtung zum Einspannen mehrerer Spannnippel einer Werkstückpalette oder eines Werkstücks und einer Werkstückpalette mit vier Spannnippeln, wobei die Spannvorrichtung vier Spannnippelaufnahmen zur Aufnahme der vier Spannnippel aufweist;
- Fig. 12: eine Seitenansicht der Spannvorrichtung und der Werkstückpalette mit den vier Spannnippeln aus Fig. 11, mit der Blickrichtung in Richtung des Pfeiles 12 in Fig. 11;
- Fig. 13: eine Seitenansicht der Spannvorrichtung und der Werkstückpalette mit den vier Spannnippeln aus den Fig. 11 und 12, mit der Blickrichtung in Richtung der Pfeile 13 in den Fig. 11 und 12;
- Fig. 14: eine perspektivische Darstellung der Spannvorrichtung und der Werkstückpalette aus den Fig. 11 bis 13, nachdem die Spannnippel der Werkstückpalette in die jeweils zugeordneten Spannnippelaufnahmen der Spannvorrichtung eingebracht worden sind;
- Fig. 15: eine Seitenansicht der Spannvorrichtung und der Werkstückpalette nach dem Einbringen der Spannnippel in die Spannnippelaufnahmen der Spannvorrichtung, mit der Blickrichtung in Richtung des Pfeiles 15 in Fig. 14;
- Fig. 16: eine Seitenansicht der Spannvorrichtung und der Werkstückpalette, nachdem die Spannnippel in die Spannnippelaufnahmen der Spannvorrichtung eingebracht worden sind, mit der Blickrichtung in Richtung der Pfeile 16 in den Fig. 14 und 15;
- Fig. 17: eine schematische Draufsicht von oben auf die Spannvorrichtung und die Werkstückpalette, nachdem die Spannnippel in die Spannnippelaufnahmen der Spannvorrichtung eingebracht worden sind;
- Fig. 18: einen vertikalen Schnitt durch die Spannvorrichtung und die Werkstückpalette mit den vier Spannnippeln, bevor die Spannnippel in die Spannnippelaufnahmen der Spannvorrichtung eingebracht worden sind, wobei die Spannvorrichtung sich in ihrem geöffneten Zustand befindet;
- Fig. 19: einen vertikalen Schnitt durch die Spannvorrichtung und die Werkstückpalette mit den vier Spannnippeln, nachdem die Spannnippel in die Spannnippelaufnahmen der Spannvorrichtung eingebracht worden sind, wobei die Spannvorrichtung sich in ihrem gespannten Zustand befindet;
- Fig. 20: einen horizontalen Schnitt durch die Spannvorrichtung, bevor die Spannnippel der Werkstückpalette in die Spannnippelaufnahme der Spannvorrichtung eingebracht worden sind, wobei die Spannvorrichtung sich in ihrem geöffneten Zustand befindet und vier Spannbolzen der Spannvorrichtung sich in ihrer Freigabestellung befinden; und
- Fig. 21: einen horizontalen Schnitt durch die Spannvorrichtung und die Spannnippel der Werkstückpalette, nachdem die Spannnippel in die Spannnippelaufnahmen der Spannvorrichtung eingebracht worden sind, wobei die Spannvorrichtung sich in ihrem gespannten Zustand befindet und die vier Spannbolzen der Spannvorrichtung sich in ihrer Arretierstellung befinden.

Gleiche oder funktional äquivalente Elemente sind in allen Figuren mit denselben Bezugszeichen bezeichnet.

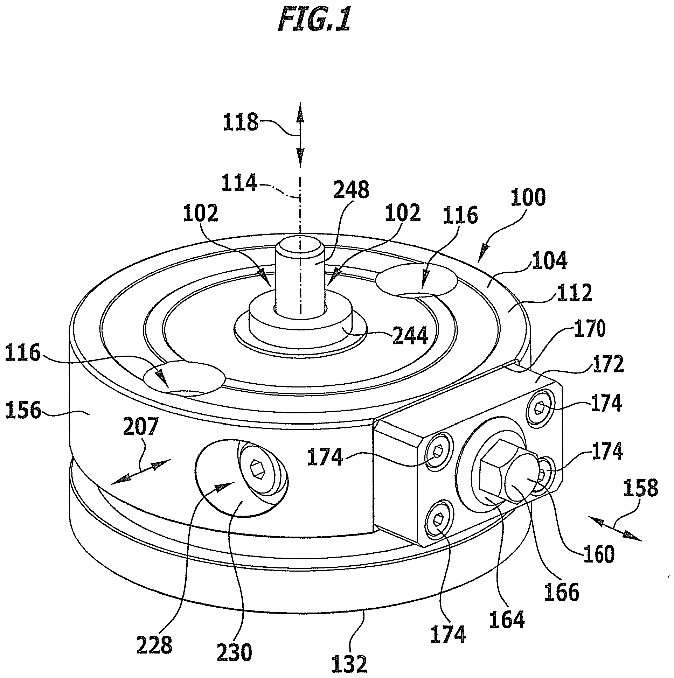

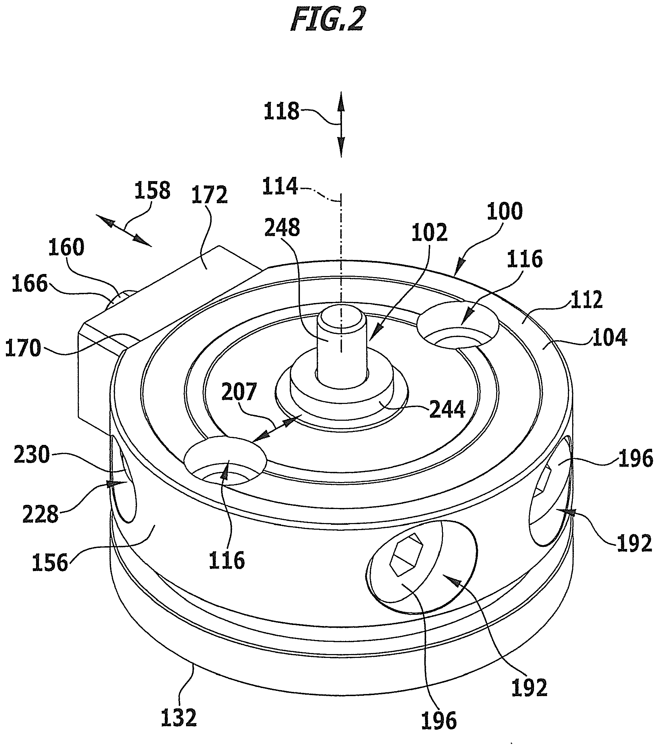

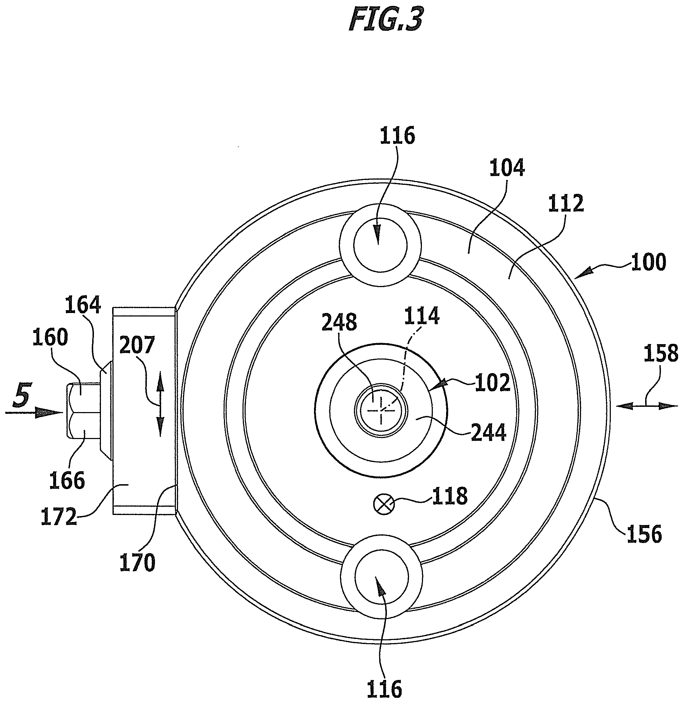

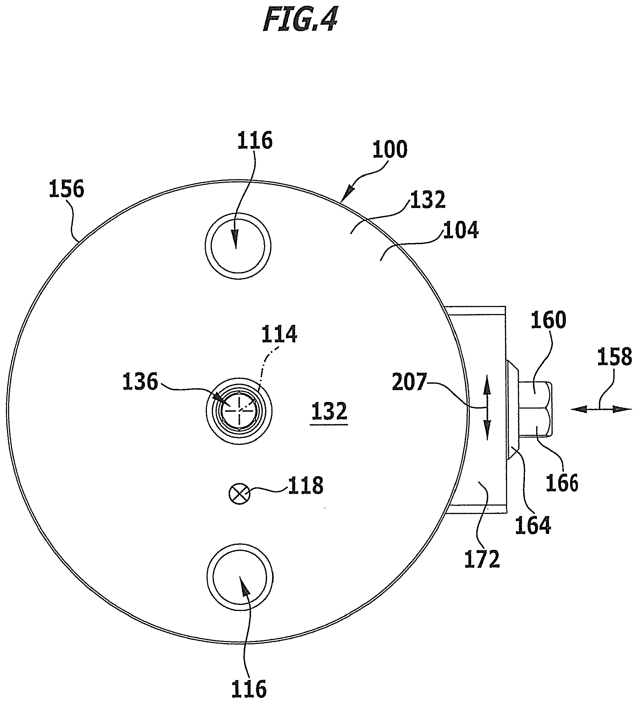

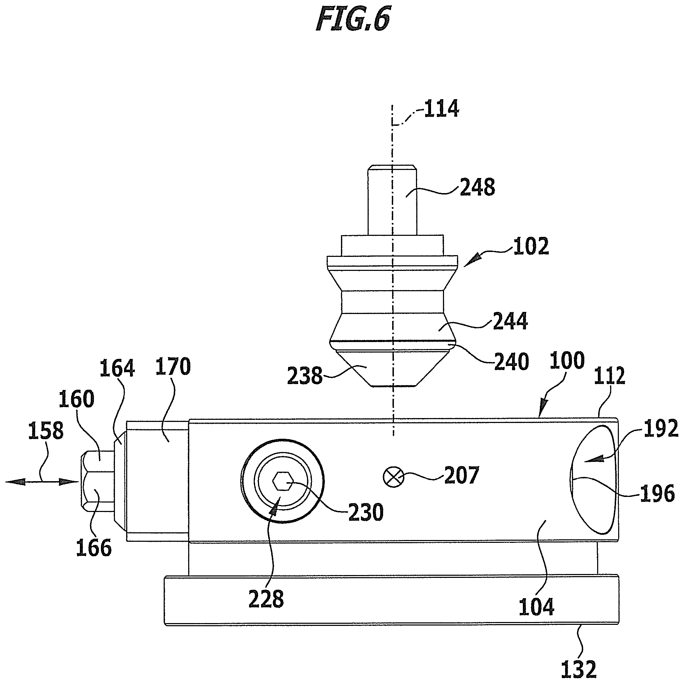

Eine in den Fig. 1 bis 10 dargestellte, als Ganzes mit 100 bezeichnete Spannvorrichtung zum Einspannen eines Spannnippels 102, der an einem (nicht dargestellten) Werkstück oder einer (nicht dargestellten) Werkstückpalette festgelegt ist, umfasst ein Gehäuse 104, in dem eine Festziehvorrichtung oder Arretiervorrichtung 106 zum Arretieren des Spannnippels 102 in einer Spannnippelaufnahme 108 der Spannvorrichtung 102 angeordnet ist.

Das Gehäuse 104 kann beispielsweise im Wesentlichen zylindrisch ausgebildet sein.

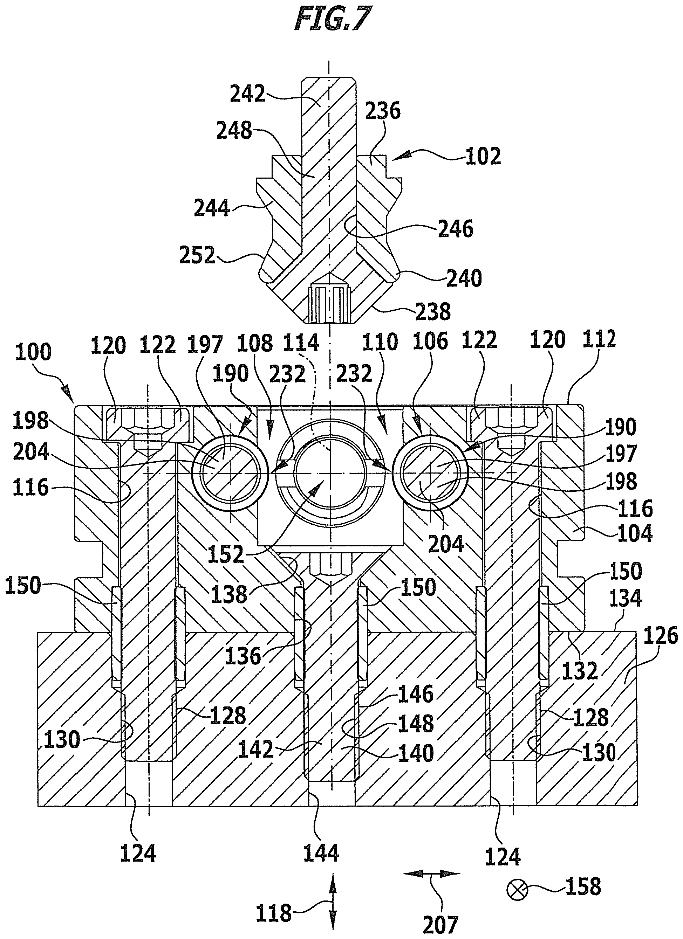

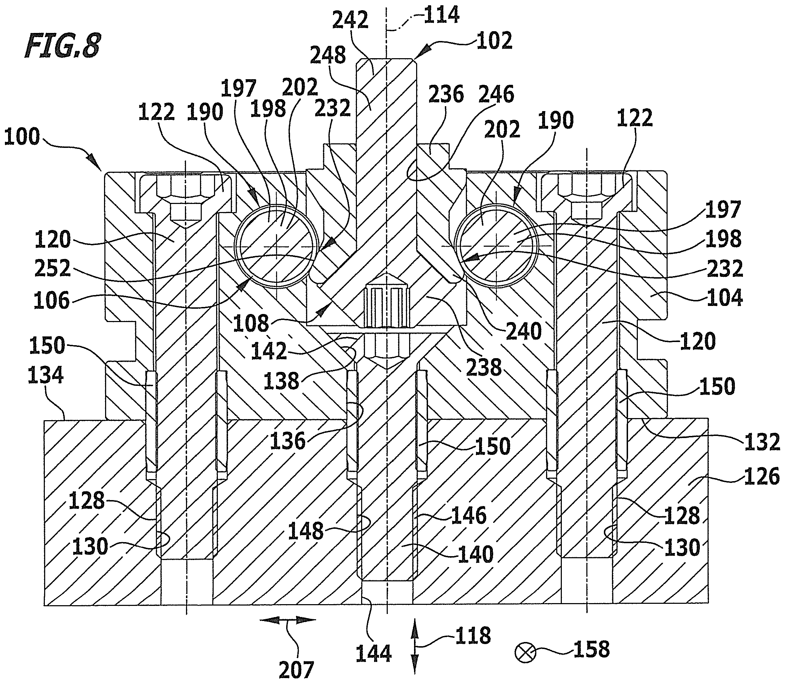

Wie am besten aus den Fig. 7 und 8 zu ersehen ist, ist die Spannnippelaufnahme 108 als eine, vorzugsweise im Wesentlichen mittige, im Wesentlichen zylindrische Ausnehmung 110 an einer Oberseite 112 des Gehäuses 104 ausgebildet.

Die Spannnippelaufnahme 108 ist im Wesentlichen rotationssymmetrisch zu einer im Wesentlichen senkrecht zur Oberseite 112 des Gehäuses 104 verlaufenden Mittelachse 114 der Spannnippelaufnahme 108 ausgebildet.

Wie ebenfalls am besten aus den Fig. 7 und 8 zu ersehen ist, weist das Gehäuse 104 ferner mehrere, beispielsweise zwei, Befestigungsmittel-Durchtrittsbohrungen 116 auf, welche sich vorzugsweise längs einer parallel zur Mittelachse 114 der Spannnippelaufnahme 108 ausgerichteten Axialrichtung 118 der Spannvorrichtung 100 erstrecken.

Die Befestigungsmittel-Durchtrittsbohrungen 116 dienen zur Aufnahme von Befestigungsmitteln 120, beispielsweise von Befestigungsschrauben 122, welche sich von der Oberseite 112 des Gehäuses 104 durch die Befestigungsmittel-Durchtrittsbohrungen 116 hindurch bis in Positionierungsbohrungen 124 in einem Abstützkörper 126, beispielsweise einem Maschinentisch, hinein erstrecken.

Die Befestigungsmittel 120 können jeweils ein Außengewinde 128 aufweisen, welches in ein hierzu komplementäres Innengewinde 130 der jeweils zugeordneten Positionierungsbohrung 124 eingedreht ist, um die Spannvorrichtung 100 lösbar an dem Abstützkörper 126 festzulegen.

Dabei liegt das Gehäuse 104 der Spannvorrichtung 100 mit einer, vorzugsweise im Wesentlichen ebenen, Unterseite 132, vorzugsweise im Wesentlichen flächig, an einer, vorzugsweise im Wesentlichen ebenen, Oberseite 134 des Abstützkörpers 126 an.

Ferner kann die Spannvorrichtung 100 mit einer weiteren Befestigungsmittel-Durchtrittsbohrung 136 versehen sein, welche sich vom unteren Ende der Spannnippelaufnahme 108 aus in der Axialrichtung 118 bis zu der Unterseite 132 des Gehäuses 104 erstreckt, wobei ein der Spannnippelaufnahme 108 zugewandter Eintrittsabschnitt 138 der Befestigungsmittel-Durchtrittsbohrung 136 sich zu der Spannnippelaufnahme 108 hin konisch erweitern kann.

Die Befestigungsmittel-Durchtrittsbohrung dient zur Aufnahme eines weiteren Befestigungsmittels 140, beispielsweise in Form einer Senkkopfschraube 142, welche sich durch die Befestigungsmittel-Durchtrittsbohrung 136 hindurch in eine derselben zugeordnete Positionierungsbohrung 144 in dem Abstützkörper 126 hinein erstreckt.

Das Befestigungsmittel 140 kann ein Außengewinde 146 aufweisen, welches in ein hierzu komplementäres Innengewinde 148 der Positionierungsbohrung 144 eingedreht ist, um die Spannvorrichtung 100 lösbar an dem Abstützkörper 126 festzulegen.

Zur Verbesserung der Positioniergenauigkeit der Spannvorrichtung 100 relativ zu dem Abstützkörper 126 können die Befestigungsmittel-Durchtrittsbohrungen 116 und 136 sowie die denselben zugeordneten Positionierungsbohrungen 124 beziehungsweise 144 gestuft ausgebildet sein, wobei einander zugewandte Abschnitte größeren Durchmessers der Befestigungsmittel-Durchtrittsbohrungen 116 und 136 sowie der Positionierungsbohrungen 124 und 144 jeweils eine Positionierungshülse 150 aufnehmen, welche sich aus jeweils einer der Befestigungsmittel-Durchtrittsbohrungen 116 oder 136 in die jeweils zugeordnete Positionierungsbohrung 124 beziehungsweise 144 erstreckt und das jeweils zugeordnete Befestigungsmittel 120 beziehungsweise 140 ringförmig umgibt.

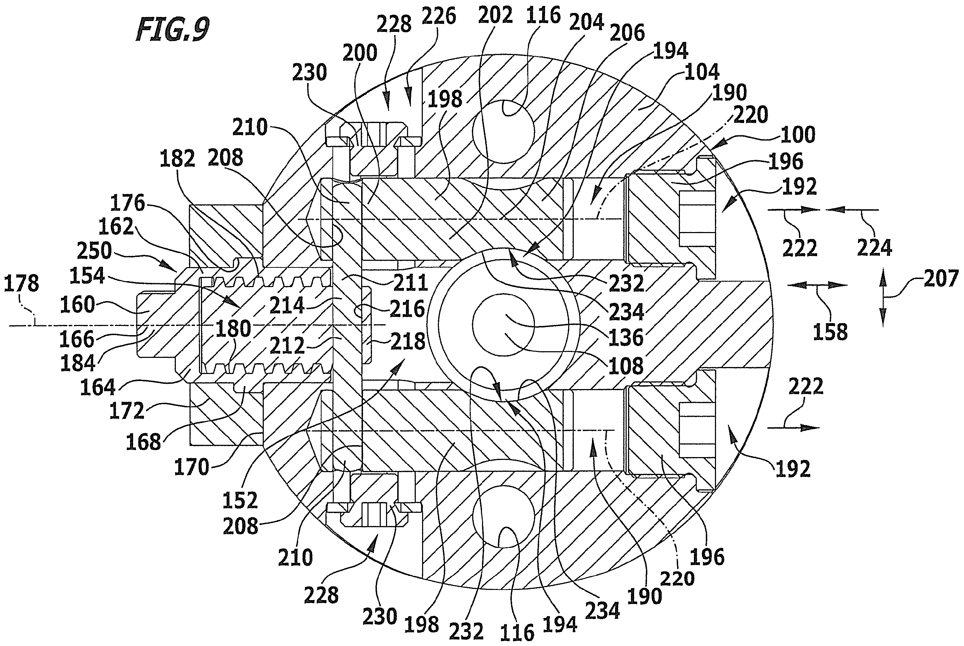

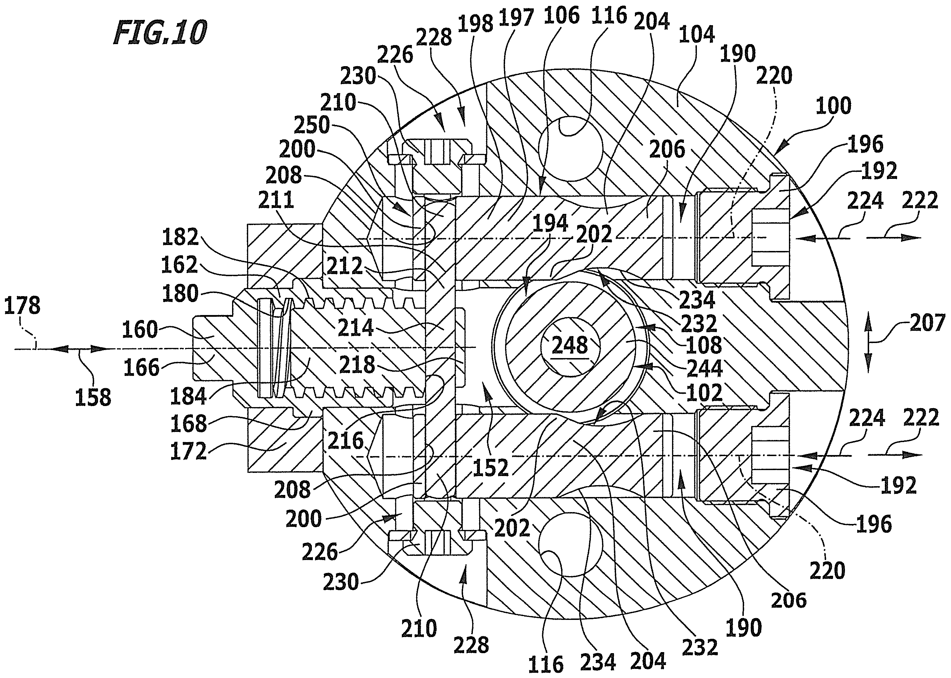

Wie am besten aus den Fig. 9 und 10 zu ersehen ist, weist die Spannvorrichtung 100 ferner einen Betätigungsmittelkanal 152 auf, welcher sich von einer Montageöffnung 154 an einer Umfangswand 156 der Spannvorrichtung 100 aus in einer senkrecht zur Axialrichtung 118 ausgerichteten Längsrichtung 158 der Spannvorrichtung 100 auf die Spannnippelaufnahme 108 zu und vorzugsweise bis in die Spannnippelaufnahme 108 hineinerstreckt.

Die Montageöffnung 154 des Betätigungsmittelkanals 152 ist durch ein Betätigungselement 160 verschlossen, welches eine im Wesentlichen hohlzylindrische Betätigungshülse 162, die zur Außenseite der Spannvorrichtung 100 hin durch eine Stirnwand 164 verschlossen ist, und einen in der Längsrichtung 158 der Spannvorrichtung 100 von der Stirnwand 164 nach außen vorstehenden Betätigungskopf 166 umfasst.

Der Betätigungskopf 166 ist nicht-rotationssymmetrisch ausgebildet.

Bei der in den Fig. 1 bis 10 dargestellten Ausführungsform weist der Betätigungskopf 166 die Form eines Außenmehrkants, insbesondere eines Außensechskants, auf.

Alternativ hierzu könnte der Betätigungskopf 166 auch die Form eines Innenmehrkants, insbesondere eines Innensechskants, aufweisen.

Die Betätigungshülse 162 ist an ihrem Außenumfang mit einem Ringbund 168 versehen, welcher an einem abgeflachten Bereich 170 der Umfangswand 156 des Gehäuses 104 anliegt und so eine Bewegung des Betätigungselements 160 in den Betätigungsmittelkanal 152 hinein verhindert.

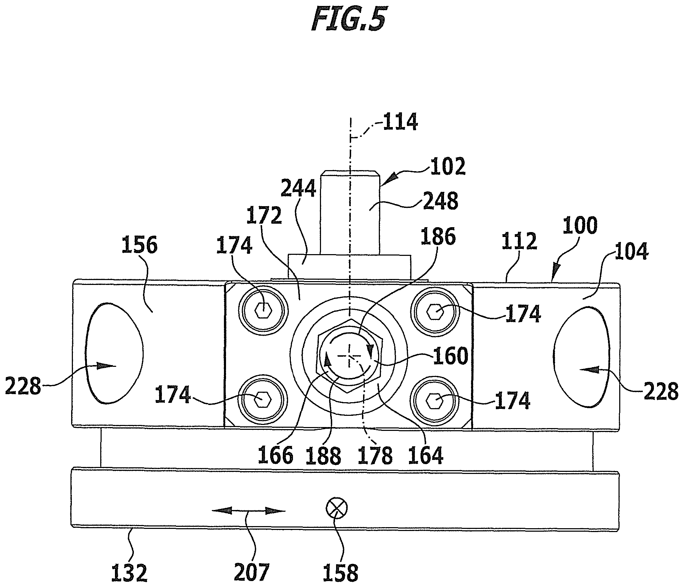

Eine Bewegung des Ringbunds 168 von dem abgeflachten Bereich 170 der Umfangswand 156 weg wird durch einen Halteblock 172 verhindert, welcher, beispielsweise mittels mehrerer, insbesondere vier, Befestigungsschrauben 174 an dem abgeflachten Bereich 170 der Umfangswand 156 festgelegt ist (siehe die Fig. 1 und 5) und von einem gestuften Durchtrittskanal 176 durchsetzt wird (siehe die Fig. 9 und 10). Der Durchtrittskanal 176 ist komplementär zu dem Ringbund 168 und zu dem zwischen dem Ringbund 168 und der Stirnwand 164 liegenden Teil der Betätigungshülse 162 ausgebildet, so dass der Ringbund 168 des Betätigungselements 160 um eine parallel zur Längsrichtung 158 verlaufende Drehachse 178 des Betätigungselements 160 drehbar zwischen dem Halteblock 172 und dem Gehäuse 104 der Spannvorrichtung 100 gehalten ist.

An ihrem Innenumfang ist die Betätigungshülse 162 des Betätigungselements 160 mit einem Innengewinde 180 versehen, welches mit einem hierzu komplementären Außengewinde 182 einer teilweise in der Betätigungshülse 162 aufgenommenen Gewindespindel 184 in Eingriff steht.

Wenn das Betätigungselement 160 in einer in Fig. 5 durch den Pfeil 186 angezeigten Festziehrichtung 186 um die Drehachse 178 gedreht wird, bewegt sich die Gewindespindel 184 längs der Drehachse 178 in den Betätigungsmittelkanal 152 hinein, auf die Spannnippelaufnahme 108 zu.

Wenn hingegen das Betätigungselement 160 in der in Fig. 5 durch den Pfeil 188 angezeigten Löserichtung 188 um die Drehachse 178 gedreht wird, bewegt die Gewindespindel 184 sich längs der Drehachse 178 aus dem Betätigungsmittelkanal 152 heraus, von der Spannnippelaufnahme 108 weg.

Wie ferner am besten aus den Fig. 9 und 10 zu ersehen ist, weist die Spannvorrichtung 100 ferner zwei ebenfalls parallel zur Längsrichtung 158 der Spannvorrichtung 100 verlaufende, jedoch seitlich gegenüber dem Betätigungsmittelkanal 152 und gegenüber der Spannnippelaufnahme 108 versetzte Führungskanäle 190 auf, welche sich von jeweils einer Montageöffnung 192 an einer der ersten Seite der Umfangswand 156 mit der Montageöffnung 154 gegenüberliegenden zweiten Seite der Umfangswand 156 ausgehend in das Gehäuse 104 der Spannvorrichtung 100 hinein erstrecken und sich mit jeweils einem äußeren Randbereich 194 der Spannnippelaufnahme 108 überschneiden.

Die Montageöffnungen 192 der Führungskanäle 190 sind mit jeweils einem Verschlussstopfen 196 verschließbar.

In jedem der Führungskanäle 190 ist jeweils ein Spannelement 197, vorzugsweise in Form eines Spannbolzens 198, angeordnet.

Jeder Spannbolzen 198 weist einen der Montageöffnung 192 abgewandten Mitnehmerabschnitt 200, einen in der Längsrichtung des Spannbolzens 198 auf den Mitnehmerabschnitt 200 folgenden Spannbereich 202, einen in der Längsrichtung des Spannbolzens 198 auf den Spannbereich 202 folgenden Abschnitt 204 verringerten Durchmessers und einen in der Längsrichtung des Spannbolzens 198 auf den Abschnitt 204 verringerten Durchmessers folgenden, der Montageöffnung 182 zugewandten Führungsabschnitt 206 auf.

Der Mitnehmerabschnitt 200 jedes Spannbolzens 198 weist eine Durchtrittsbohrung 208 auf, welche sich in einer senkrecht zur Längsrichtung 158 und senkrecht zur Axialrichtung 118 der Spannvorrichtung 100 verlaufenden Querrichtung 207 durch den Spannbolzen 198 hindurch erstreckt.

Jede Durchtrittsbohrung 208 nimmt jeweils einen Endabschnitt 210 eines Mitnehmerelements 211, vorzugsweise in Form eines Mitnehmerbolzens 212, auf, welches sich in seinem zwischen den Endabschnitten 210 liegenden Mittelabschnitt 214 durch eine ebenfalls längs der Querrichtung 207 der Spannvorrichtung 100 verlaufende Durchtrittsbohrung 216 in einem der Stirnwand 164 abgewandten Endabschnitt 218 der Gewindespindel 184 hindurch erstreckt.

Durch den Mitnehmerbolzen 212 wird die Gewindespindel 184 gegen eine Verdrehung um die Drehachse 178 gesichert und die Linearbewegung der Gewindespindel 184 längs der Drehachse 178 auf die Spannbolzen 198 übertragen.

Auf diese Weise sind die Spannbolzen 198 im jeweils zugeordneten Führungskanal 190 zwischen der in Fig. 9 dargestellten Freigabestellung und der in Fig. 10 dargestellten Arretierstellung verschiebbar.

Bewegt sich die Gewindespindel 184 mit dem Mitnehmerbolzen 212 im Betätigungsmittelkanal 152 nach innen, so werden die Spannbolzen 198 durch den Mitnehmerbolzen 212 von der in Fig. 9 dargestellten Freigabestellung in einer parallel zu ihrer jeweiligen Längsachse 220 und parallel zur Längsrichtung 158 der Spannvorrichtung 100 verlaufenden Arretierrichtung 222 in die in Fig. 10 dargestellte Arretierstellung bewegt.

Bewegt sich die Gewindespindel 184 mit dem Mitnehmerbolzen 212 aus dem Betätigungsmittelkanal 152 heraus, so werden die Spannbolzen 198 von der in Fig. 10 dargestellten Arretierstellung längs einer parallel zu ihrer jeweiligen Längsachse 220 und parallel zur Längsrichtung 158 der Spannvorrichtung 100 verlaufenden, der Arretierrichtung 222 entgegengesetzten Freigaberichtung 224 in die in Fig. 9 dargestellte Freigabestellung bewegt.

Um den Mitnehmerbolzen 212 bei der Montage der Spannvorrichtung 100 in die Durchtrittsbohrungen 208 der Mitnehmerabschnitte 200 der Spannbolzen 198 einsetzen zu können, weist die Spannvorrichtung 100 ferner einen parallel zur Querrichtung 207 verlaufenden Montagekanal 226 auf, welcher die beiden Führungskanäle 190 schneidet und an zwei Montageöffnungen 228 an einander gegenüberliegenden Seiten der Umfangswand 156 des Gehäuses 104 der Spannvorrichtung 100 mündet.

Die Montageöffnungen 228 des Montagekanals 226 sind mittels Führungsstopfen 230 verschließbar.

Wie am besten aus Fig. 9 zu ersehen ist, ist der Abschnitt 204 verringerten Durchmessers jedes Spannbolzens 198 von einer ringförmigen Ausnehmung 232 mit einer konkav gekrümmten Begrenzungsfläche 234 umgeben.

Diese Ausnehmung 232 fluchtet in der in Fig. 9 dargestellten Freigabestellung der Spannbolzen 198 mit der Spannnippelaufnahme 108, so dass die Spannbolzen 198 in der Freigabestellung nicht in die Spannnippelaufnahme 108 hinein vorstehen und somit das Einführen des Spannnippels 102 in die Spannnippelaufnahme 108 und/oder das Entnehmen des Spannnippels 102 aus der Spannnippelaufnahme 108 nicht behindern.

In der in Fig. 10 dargestellten Arretierstellung der Spannbolzen 198 stehen hingegen die Spannbereiche 202 der Spannbolzen 198 auf einander gegenüberliegenden Seiten der Spannnippelaufnahme 108 in die Spannnippelaufnahme 108 vor und kommen in Eingriff mit einem in der Spannnippelaufnahme 108 befindlichen Spannnippel 102, so dass der Spannnippel 102 durch die Spannbereiche 202 der Spannbolzen 198 in der Spannnippelaufnahme 108 durch Formschluss zurückgehalten wird.

Wie am besten aus der Schnittdarstellung von Fig. 7 zu ersehen ist, umfasst der Spannnippel 102 eine Basis 236, mit welcher der Spannnippel 102 an der (nicht dargestellten) Werkstückpalette oder an dem (nicht dargestellten) Werkstück anliegt, eine der Werkstückpalette beziehungsweise dem Werkstück abgewandte Spitze 238 und eine zwischen der Basis 236 und der Spitze 238 liegende Verdickung 240, welche in der Arretierstellung der Spannbolzen 198 von den Spannbereichen 202 der Spannbolzen 198 hintergriffen wird, so dass der Spannnippel 102 in diesem gespannten Zustand der Spannvorrichtung 100 durch Formschluss in der Spannnippelaufnahme 108 der Spannvorrichtung 100 arretiert ist.

Der Spannnippel 102 ist durch Stoffschluss und/oder durch Formschluss an der Werkstückpalette oder an dem Werkstück festgelegt.

Beispielsweise kann vorgesehen sein, dass der Spannnippel 102 ein Gewinde 242 aufweist, welches mit einem komplementären Gewinde einer (nicht dargestellten) Gewindebohrung der Werkstückpalette oder des Werkstücks verschraubt ist.

Der Spannnippel 102 kann einteilig oder, wie in den Figuren dargestellt, mehrteilig ausgebildet sein.

Beispielsweise kann vorgesehen sein, dass die Basis 236 und die Umfangswand des Spannnippels 102 bis zu der Verdickung 240 einen ringförmigen Mantel 244 des Spannnippels 102 bilden, durch dessen mittige Ringöffnung 246 sich ein Schraubteil 248 des Spannnippels 102 hindurcherstreckt, wobei an dem Schraubteil 248 die Spitze 238 und das Gewinde 242 des Spannnippels 102 angeordnet sind, so dass das Schraubteil 248 mit der Werkstückpalette oder dem Werkstück verschraubt ist und den Mantel 244 des Spannnippels 102 so hintergreift, dass der Mantel 244 durch Formschluss an der Werkstückpalette oder an dem Werkstück gehalten ist.

Jede Werkstückpalette oder jedes Werkstück, die für einen Bearbeitungsvorgang eingespannt werden sollen, können mit mehreren solchen Spannnippeln 102 versehen sein, welche mit jeweils einer Spannvorrichtung 100 der vorstehend beschriebenen Art eingespannt werden.

Zum Einspannen der Werkstückpalette oder des Werkstücks mit dem Spannnippel 102 an der Spannvorrichtung 100 wird wie folgt vorgegangen:
Die Spannvorrichtung 100 befindet sich zunächst in ihrem in den Fig. 7 und 9 dargestellten geöffneten Zustand, in welchem die Spannbolzen 198 ihre Freigabestellung einnehmen und die Ausnehmungen 232 der Spannbolzen 198 im Bereich der Spannnippelaufnahme 108 angeordnet sind, so dass die Spannbolzen 198 nicht in das Innere der Spannnippelaufnahme 108 vorstehen.

In diesem geöffneten Zustand der Spannvorrichtung 100 kann der Spannnippel 102 ungehindert längs der Axialrichtung 118 der Spannvorrichtung 100 in die Spannnippelaufnahme 108 eingebracht werden.

Die Werkstückpalette oder das Werkstück wird so auf die Spannvorrichtung 100 aufgesetzt, dass die Werkstückpalette beziehungsweise das Werkstück mit einer Unterseite, vorzugsweise im Wesentlichen flächig, an der Oberseite 112 des Gehäuses 104 der Spannvorrichtung 100 anliegt und der Spannnippel 102 in die Spannnippelaufnahme 108 der Spannvorrichtung 100 gelangt.

Das Betätigungselement 160, die Gewindespindel 184 und das Mitnehmerelement 211, insbesondere der Mitnehmerbolzen 212, bilden eine Bewegungsvorrichtung 250 der Arretiervorrichtung 106 der Spannvorrichtung 100, mittels welcher die Spannbolzen 198 längs ihrer jeweiligen Arretierrichtung 222, welche keine Radialrichtung des Spannnippels 102 und keine Radialrichtung der Spannnippelaufnahme 108 ist, sondern tangential zum Umfang des Spannnippels 102 und zum Umfang der Spannnippelaufnahme 108 verläuft, von der in Fig. 9 dargestellten Freigabestellung in die in Fig. 10 dargestellte Arretierstellung und längs ihrer jeweiligen Freigaberichtung 224, welche ebenfalls keine Radialrichtung des Spannnippels 102 und keine Radialrichtung der Spannnippelaufnahme 108 ist, von der Arretierstellung in die Freigabestellung bewegbar sind.

Durch Angreifen an dem Betätigungskopf 166 des Betätigungselements 160 mittels eines (nicht dargestellten) Betätigungswerkzeugs, beispielsweise eines Schraubenschlüssels, kann das Betätigungselement 160 in der Festziehrichtung 186 oder in der Löserichtung 188 um die Drehachse 178 gedreht werden.

Nach dem Einbringen des Spannnippels 102 in die Spannnippelaufnahme 108 wird das Betätigungselement 160 in der Festziehrichtung 186 gedreht, wodurch die Gewindespindel 184 sich parallel zu den Ausziehrichtungen 222 der Spannbolzen 198 auf die Spannnippelaufnahme 108 zu bewegt. Diese Linearbewegung der Gewindespindel 184 wird durch den Mitnehmerbolzen 212 auf die Spannbolzen 198 übertragen, welche somit längs ihrer Arretierrichtungen 222 von der in Fig. 9 dargestellten Freigabestellung in die in Fig. 10 dargestellte Arretierstellung überführt werden.

In der in Fig. 10 dargestellten Arretierstellung steht jeder Spannbolzen 198 mit seinem Spannbereich 202 in Eingriff mit dem Spannnippel 102 (siehe auch Fig. 8), und zwar derart, dass der jeweilige Spannbereich 202 die Verdickung 240 des Spannnippels 102 auf der der Spitze 238 abgewandten Seite der Verdickung 240 hintergreift.

Dabei liegt jeder Spannbereich 202 vorzugsweise an einer gegenüber der Axialrichtung 118 geneigten Anlagefläche 252 des Spannnippels 102 an.

Beim Überführen der Spannvorrichtung 100 vom geöffneten Zustand in den gespannten Zustand und im gespannten Zustand der Spannvorrichtung 100 können die Spannbereiche 202 somit auch eine komponentenweise in der Axialrichtung 118 der Spannvorrichtung 100 von der Oberseite 112 weg gerichtete Spannkraft auf den Spannnippel 102 ausüben, durch welche die Werkstückpalette oder das Werkstück gegen die Oberseite 112 der Spannvorrichtung 100 gezogen wird.

Der Spannnippel 102 ist im gespannten Zustand der Spannvorrichtung 100 durch die Spannbolzen 198 formschlüssig in der Spannnippelaufnahme 108, vorzugsweise im Wesentlichen spielfrei in der Axialrichtung 118 und in der Querrichtung 207 der Spannvorrichtung 100, arretiert.

Um die Werkstückpalette oder das Werkstück wieder von der Spannvorrichtung 100 lösen zu können, wird das Betätigungselement 160 in der Löserichtung 188 um die Drehachse 178 gedreht, was zur Folge hat, dass die Gewindespindel 184 und damit auch der Mitnehmerbolzen 212 parallel zu den Freigaberichtungen 224 der Spannbolzen 198 von der Spannnippelaufnahme 108 weg bewegt werden.

Die vom Mitnehmerbolzen 212 mitbewegten Spannbolzen 198 bewegen sich hierdurch in den Führungskanälen 190 in ihren zur jeweiligen Arretierrichtung 222 entgegengesetzten Freigaberichtungen 224 aus der in Fig. 10 dargestellten Arretierstellung in die in Fig. 9 dargestellte Freigabestellung, in welcher die Spannbereiche 202 der Spannbolzen 198 nicht mehr in Eingriff mit dem Spannnippel 102 stehen und insbesondere nicht mehr die Verdickung 240 des Spannnippels 102 in der Axialrichtung 118 hintergreifen.

Wenn die Spannbolzen 198 sich in ihrer Freigabestellung befinden und somit die Spannvorrichtung 100 ihren gelösten Zustand einnimmt, kann der Spannnippel 102 in der Axialrichtung 118 aus der Spannnippelaufnahme 108 heraus bewegt werden, so dass die Werkstückpalette oder das Werkstück von der Oberseite 112 des Gehäuses 104 der Spannvorrichtung 100 abgenommen werden kann.

Bei der Bewegung von der Freigabestellung in die Arretierstellung und/oder von der Arretierstellung in die Freigabestellung sind die Spannbolzen 198 sowohl durch den Führungsabschnitt 206, welcher in der Arretierrichtung 222 vor der Ausnehmung 232 liegt, als auch durch den Spannbereich 202, welcher in der Arretierrichtung 222 hinter der Ausnehmung 232 liegt, an der hierzu komplementär ausgebildeten Begrenzungswand des jeweiligen Führungskanals 190 verschieblich geführt.

In der Arretierstellung jedes Spannbolzens 198 können Kräfte vom Spannnippel 102 über den Spannbereich 202 jedes Spannbolzens 198 durch den Kontakt zwischen dem Spannbereich 202 und der Begrenzungswand des Führungskanals 190 und durch den Kontakt zwischen dem Führungsabschnitt 206 und der Begrenzungswand des Führungskanals 190 auf das Gehäuse 104 der Spannvorrichtung 100 übertragen werden, wodurch besonders große Haltekräfte für den Spannnippel 102 von der Spannvorrichtung 100 aufgenommen werden können.

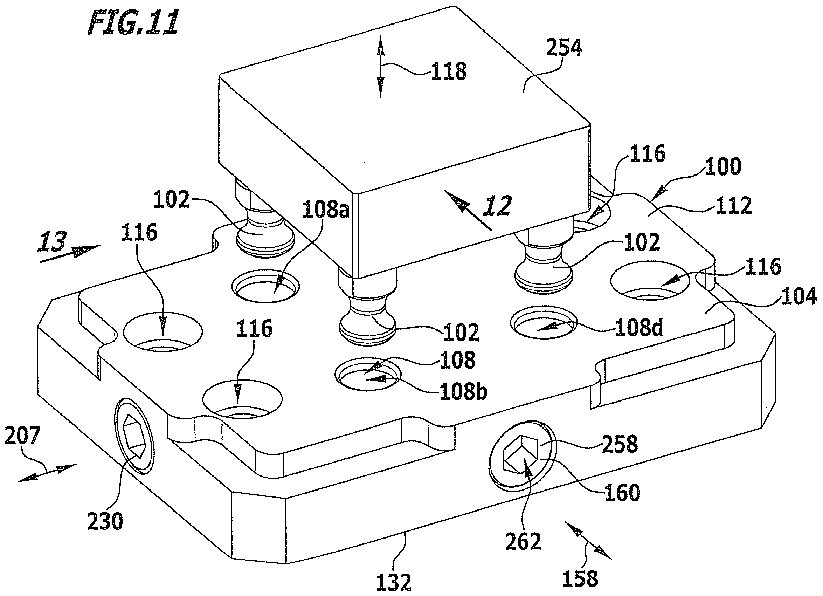

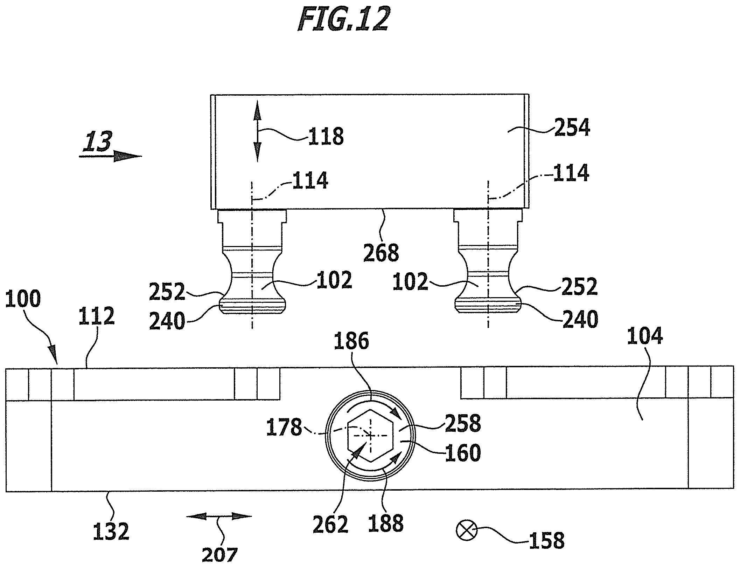

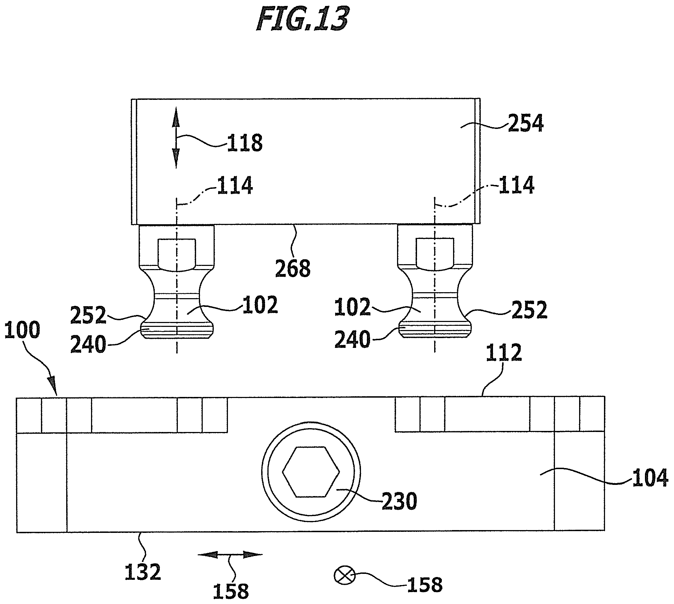

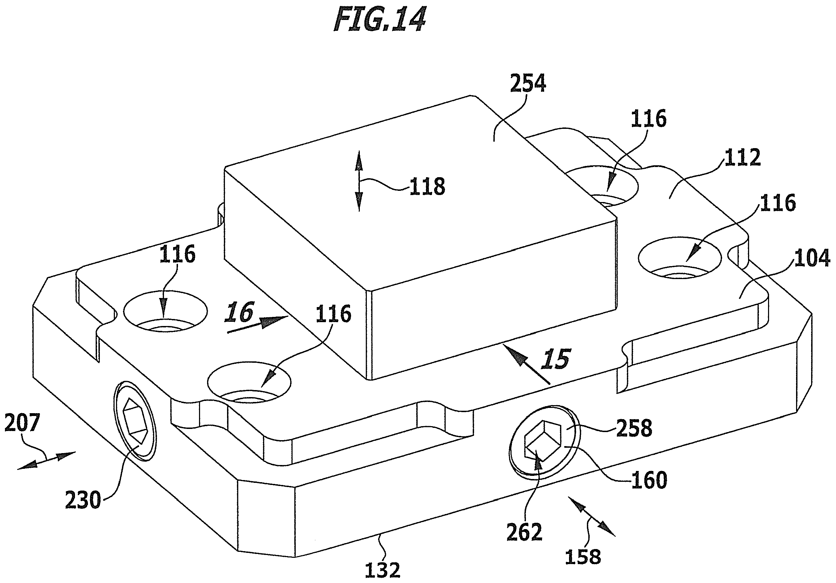

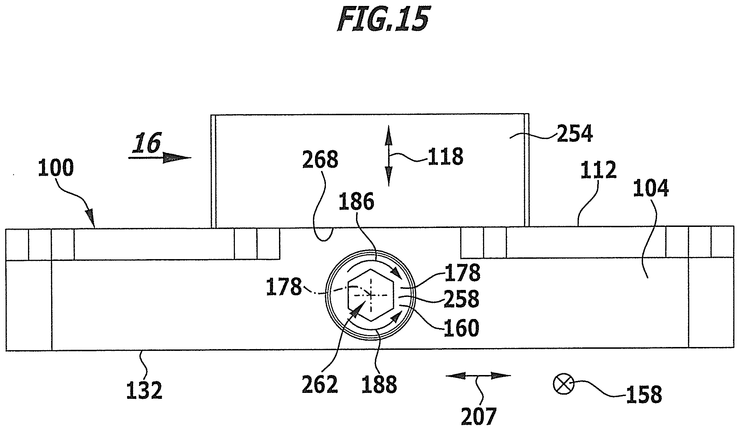

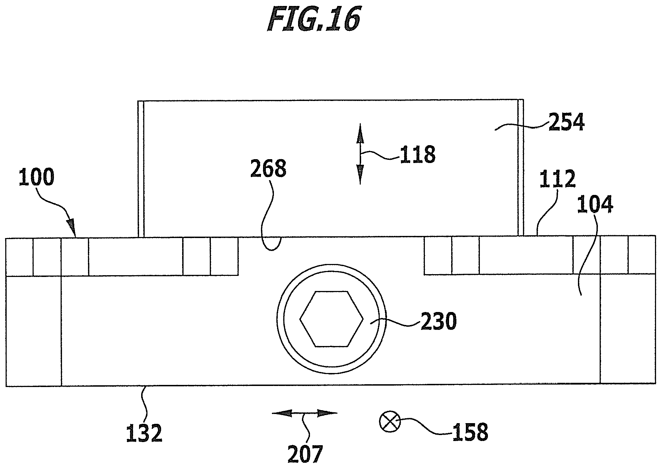

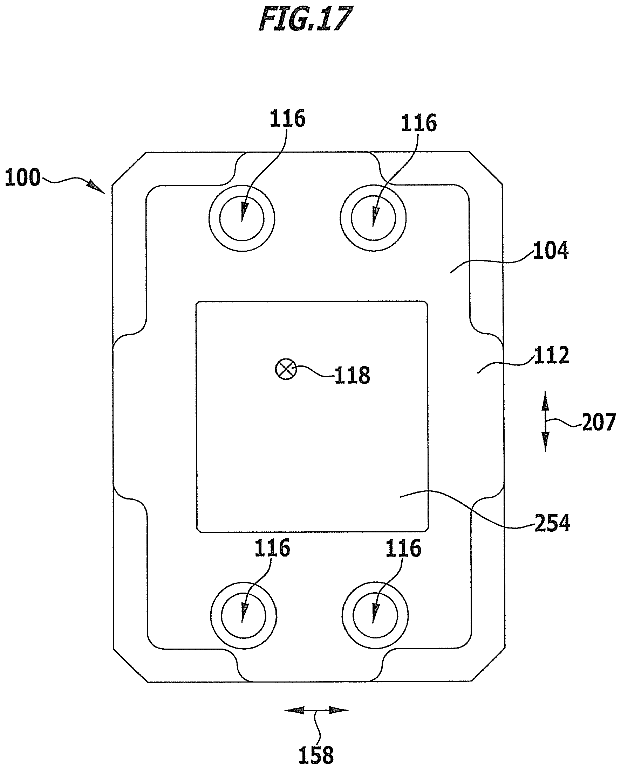

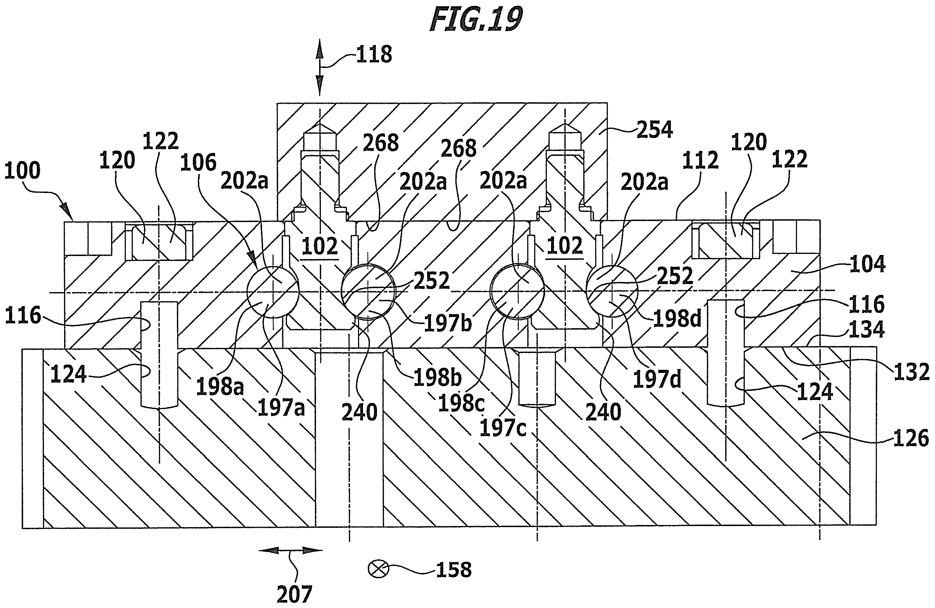

Eine in den Fig. 11 bis 21 dargestellte zweite Ausführungsform einer Spannvorrichtung 100 unterscheidet sich von der in den Fig. 1 bis 10 dargestellten ersten Ausführungsform dadurch, dass sie nicht nur eine Spannnippelaufnahme 108, sondern vier Spannnippelaufnahmen 108 zur gleichzeitigen Aufnahme von vier Spannnippeln 102 einer Werkstückpalette 254 oder eines Werkstücks aufweist.

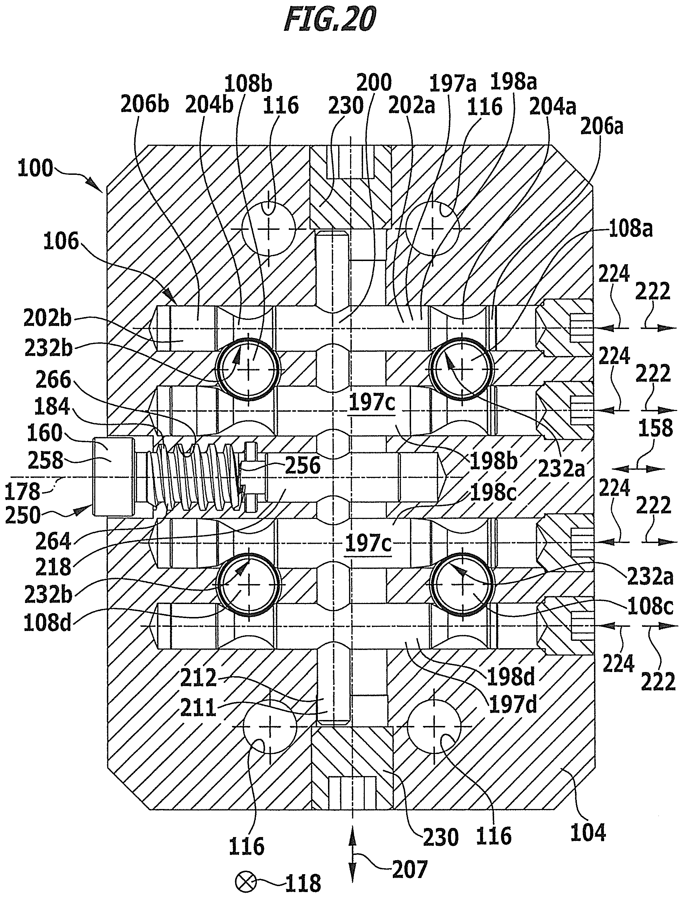

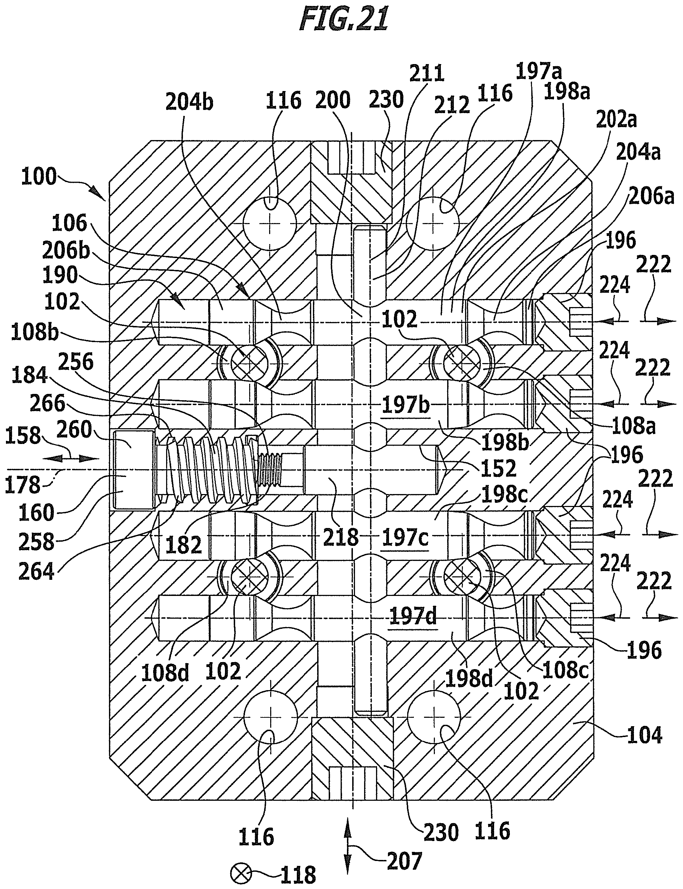

Wie am besten aus den Fig. 20 und 21 zu ersehen ist, sind die Spannnippelaufnahmen 108 bei dieser Ausführungsform der Spannvorrichtung 100 so angeordnet, dass jeweils zwei Spannnippelaufnahmen 108a und 108b beziehungsweise 108c und 108d in der Längsrichtung 158 der Spannvorrichtung 100 aufeinanderfolgend angeordnet sind.

Jedem Paar von Spannnippelaufnahmen 108a und 108b beziehungsweise 108c und 108d ist jeweils ein Paar von Spannelementen 197a und 197b beziehungsweise 197c und 197d in Form von Spannbolzen 198a und 198b beziehungsweise 198c und 198d zugeordnet, welche sich tangential zu den jeweils zugeordneten Spannnippelaufnahmen 108a und 108b beziehungsweise 108c und 108d erstrecken.

Jeder dieser Spannbolzen 198a bis 198d weist bei dieser Ausführungsform der Spannvorrichtung 100 einen ersten Spannbereich 102a, einen ersten Abschnitt 204a verringerten Durchmessers und einen ersten Führungsabschnitt 206a auf, welche in der Arretierrichtung 222 vor dem Mitnehmerabschnitt 200, an welchem das Mitnehmerelement 211, beispielsweise in Form des Mitnehmerbolzens 212, angreift, angeordnet sind, und einen zweiten Abschnitt 204b verringerten Durchmessers, einen zweiten Spannbereich 202b und einen zweiten Führungsabschnitt 206b, welche in der Arretierrichtung 222 hinter dem Mitnehmerabschnitt 200 des jeweiligen Spannbolzens 198 angeordnet sind.

Der Mitnehmerbolzen 212 erstreckt sich bei dieser Ausführungsform durch die Mitnehmerabschnitte 200 von vier Spannbolzen 198a bis 198d und durch den (vorzugsweise gewindefreien) Endabschnitt 218 der Gewindespindel 184 hindurch.

Der Endabschnitt 218 der Gewindespindel 184 weist bei dieser Ausführungsform vorzugsweise einen größeren Durchmesser auf als ein Gewindeabschnitt 256 der Gewindespindel 184, welcher mit dem Betätigungselement 160 in Eingriff steht.

Der Endabschnitt 218 der Gewindespindel 184 ist bei dieser Ausführungsform an der hierzu komplementär ausgebildeten Begrenzungswand des Betätigungsmittelkanals 152 in der Längsrichtung 158 der Spannvorrichtung 100 verschieblich geführt.

Das Betätigungselement 160 der Bewegungsvorrichtung 250 ist bei dieser Ausführungsform als eine Betätigungsschraube 258 mit einem Schraubenkopf 260 ausgebildet.

Der Schraubenkopf 260 kann insbesondere eine Ausnehmung 262 in Form eines Innenmehrkants, beispielsweise eines Innensechskants, aufweisen.

Ein geeignetes Betätigungswerkzeug, beispielsweise ein Innenmehrkantschlüssel, insbesondere ein Innensechskantschlüssel, kann an dem Schraubenkopf 260 angreifen, um die Betätigungsschraube in der Festziehrichtung 186 oder in der Löserichtung 188 um deren Drehachse 178 zu drehen.

Ein Außengewinde 264 der Betätigungsschraube 258 greift in ein hierzu komplementäres Innengewinde 266 am Umfang des Betätigungsmittelkanals 152 ein.

Ferner weist die Betätigungsschraube 258 an ihrem dem Schraubenkopf 260 gegenüberliegenden Ende ein Gewindesackloch auf, das mit einem Innengewinde versehen ist, mit welchem das hierzu komplementär ausgebildete Außengewinde 182 des Gewindeabschnitts 256 der Gewindespindel 184 in Eingriff steht.

Das Außengewinde 264 und das Innengewinde der Betätigungsschraube 258 weisen gegenläufigen Drehsinn auf, so dass das Außengewinde 182 der Gewindespindel 184 sich aus dem Innengewinde der Betätigungsschraube 158 heraus bewegt, wenn die Betätigungsschraube 258 in der Festziehrichtung 186 gedreht wird, und das Außengewinde 182 der Gewindespindel 184 sich in das Innengewinde der Betätigungsschraube 258 hinein bewegt, wenn die Betätigungsschraube 258 in der Löserichtung 188 gedreht wird.

Vorzugsweise weist das Außengewinde 264 der Betätigungsschraube 258 eine andere, insbesondere eine größere, Ganghöhe auf als das Innengewinde der Betätigungsschraube 258 und das Außengewinde 182 der Gewindespindel 184, so dass der Drehwinkel, um welchen die Betätigungsschraube 258 um die Drehachse 178 gedreht werden muss, damit der erforderliche Vorschub der Gewindespindel 184, um die Spannbolzen 198 von der in Fig. 20 dargestellten Freigabestellung in die in Fig. 21 dargestellte Arretierstellung zu bewegen, erzielt wird, durch Wahl des Verhältnisses der Ganghöhen auf einen gewünschten Wert einstellbar ist.

Die lösbare Festlegung der Spannvorrichtung 100 an einem Abstützkörper 126, insbesondere an einem Maschinentisch, erfolgt bei dieser Ausführungsform der Spannvorrichtung 100 vorzugsweise mittels vier Befestigungsmitteln 120, welche jeweils eine Befestigungsmittel-Durchtrittsbohrung 116 in dem Gehäuse 104 der Spannvorrichtung 100 durchsetzen.

Das bei der ersten Ausführungsform unterhalb der Spannnippelaufnahme 108 angeordnete weitere Befestigungsmittel 140 kann bei dieser Ausführungsform der Spannvorrichtung 100 entfallen.

Ferner ist das Gehäuse 104 der Spannvorrichtung 100 bei dieser Ausführungsform nicht im Wesentlichen zylindrisch, sondern im Wesentlichen platten- oder quaderförmig ausgebildet.

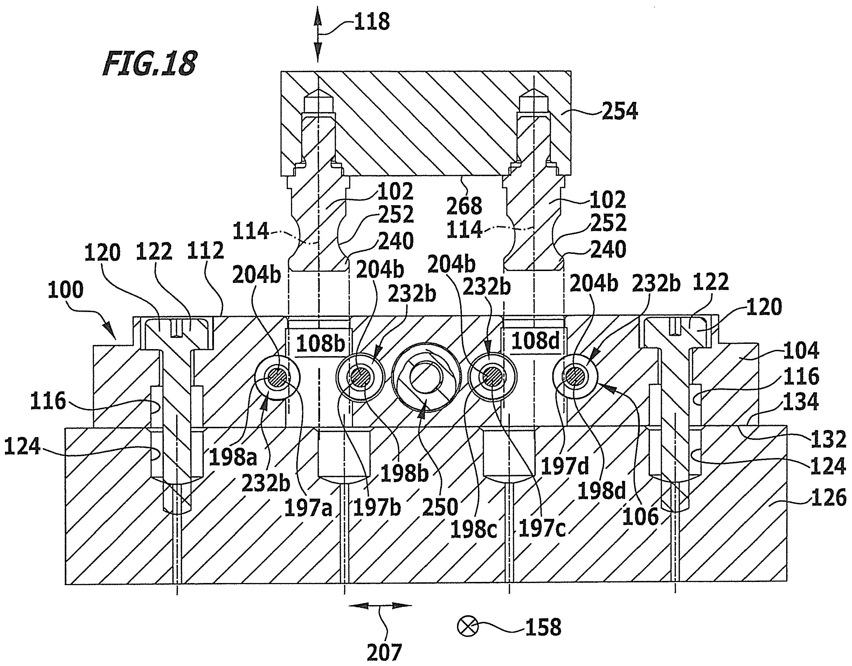

Mittels der vorstehend beschriebenen zweiten Ausführungsform der Spannvorrichtung 100 wird ein Einspannvorgang einer Werkstückpalette 254 oder eines Werkstücks mit mehreren, beispielsweise vier, Spannnippeln 102 wie folgt durchgeführt:
Im in den Fig. 18 und 20 dargestellten geöffneten Zustand der Spannvorrichtung 100 befinden sich die Spannbolzen 198a bis 198d in ihrer Freigabestellung, in welcher die Spannbereiche 202a, 202b der Spannbolzen 198a bis 198d nicht in die jeweils zugeordneten Spannnippelaufnahmen 108a bis 108d eingreifen, sondern vielmehr die die jeweiligen Abschnitte 204a, 204b verringerten Durchmessers ringförmig umgebenden Ausnehmungen 232a, 232b mit der jeweils zugeordneten Spannnippelaufnahme 108a bis 108d fluchten.

In diesem geöffneten Zustand der Spannvorrichtung 100 können die Spannnippel 102 der Werkstückpalette 254 oder des Werkstücks ungehindert in die Spannnippelaufnahmen 108a bis 108d eingeführt werden.

Die Werkstückpalette 254 oder das Werkstück wird in der Axialrichtung 118 so auf das Gehäuse 104 der Spannvorrichtung 100 aufgesetzt, dass eine Unterseite 268 der Werkstückpalette 254 oder des Werkstücks, vorzugsweise im Wesentlichen flächig, an der Oberseite 112 des Gehäuses 104 der Spannvorrichtung 100 anliegt und die Spannnippel 102 in der jeweils zugeordneten Spannnippelaufnahme 108a bis 108d aufgenommen sind.

Nun wird das Betätigungselement 160 in Form der Betätigungsschraube 258 in der Festziehrichtung 186 um die Drehachse 178 gedreht, beispielsweise mittels eines Innenmehrkantschlüssels, was zur Folge hat, dass die Gewindespindel 184 sich parallel zu den Arretierrichtungen 222 der Spannbolzen 198a bis 198d in den Betätigungsmittelkanal 152 hinein bewegt.

Diese Linearbewegung der Gewindespindel 184 wird über den Mitnehmerbolzen 212 auf die Spannbolzen 198a bis 198d übertragen, so dass die Spannbolzen 198a bis 198d von der in Fig. 20 dargestellten Freigabestellung in die in Fig. 21 dargestellte Arretierstellung bewegt werden.

Dabei kommen die Spannbereiche 202a und 202b der Spannbolzen 198a bis 198d in Eingriff mit den Spannnippeln 102 in den Spannnippelaufnahmen 108a bis 108d, und zwar derart, dass die Spannbereiche 202a, 202b die Verdickungen 240 der Spannnippel 102 in der Axialrichtung 118 hintergreifen, so dass die Spannnippel 102 durch Formschluss in den Spannnippelaufnahmen 108a bis 108d arretiert sind.

Zum Lösen der Werkstückpalette 254 oder des Werkstücks von der Spannvorrichtung 100 wird das Betätigungselement 160 in Form der Betätigungsschraube 258 in der Löserichtung 188 um die Drehachse 178 gedreht, wodurch die Gewindespindel 184 parallel zu den Freigaberichtungen 224 der Spannbolzen 198a bis 198d auf den Schraubenkopf 260 der Betätigungsschraube 258 zu bewegt wird, was zur Folge hat, dass sich die Spannbolzen 198a bis 198d von der in Fig. 21 dargestellten Arretierstellung in die in Fig. 20 dargestellte Freigabestellung zurückbewegen, in welcher die Spannbereiche 202a, 202b der Spannbolzen 198a bis 198d nicht mehr in Eingriff mit den Spannnippeln 102 stehen.

In diesem geöffneten Zustand der Spannvorrichtung 100 kann die Werkstückpalette 254 oder das Werkstück von der Spannvorrichtung 100 abgehoben werden, wobei die Spannnippel 102 aus den Spannnippelaufnahmen 108a bis 108d entnommen werden.

Im Übrigen stimmt die in den Fig. 11 bis 21 dargestellte zweite Ausführungsform einer Spannvorrichtung 100 hinsichtlich Aufbau, Funktion und Herstellungsweise mit der in den Fig. 1 bis 10 dargestellten ersten Ausführungsform überein, auf deren vorstehende Beschreibung insoweit Bezug genommen wird.

## Patentansprüche

1. Spannvorrichtung zum Einspannen mindestens eines Spannnippels (102) einer Werkstückpalette (254) oder eines Werkstücks, umfassend eine Arretiervorrichtung (106) zum Arretieren des Spannnippels (102) in einer Spannnippelaufnahme (108) der Spannvorrichtung (100),
wobei die Arretiervorrichtung (106) mindestens ein Spannelement (197) mit mindestens einem Spannbereich (202) umfasst und
wobei der Spannbereich (202) in einer Arretierstellung des Spannelements (197) in Eingriff mit dem zugeordneten Spannnippel (102) steht und in einer Freigabestellung des Spannelements (197) nicht in Eingriff mit dem zugeordneten Spannnippel (102) steht,
**dadurch gekennzeichnet,**
**dass** die Arretiervorrichtung (106) eine Bewegungsvorrichtung (250) umfasst, mittels welcher mindestens ein Spannelement (197) längs einer Arretierrichtung (222), welche keine Radialrichtung des zugeordneten Spannnippels (102) ist, und längs einer gegenüber der Radialrichtung des Spannnippels (102) seitlich versetzten Bewegungsbahn von der Freigabestellung in die Arretierstellung und/oder längs einer Freigaberichtung (224), welche keine Radialrichtung des zugeordneten Spannnippels (102) ist, und längs einer gegenüber der Radialrichtung des Spannnippels (102) seitlich versetzten Bewegungsbahn von der Arretierstellung in die Freigabestellung bewegbar ist.

2. Spannvorrichtung nach Anspruch 1, **dadurch gekennzeichnet, dass** die Bewegungsvorrichtung (250) ein mechanisches Betätigungselement (160) umfasst, mittels welchem die Bewegung des mindestens einen Spannelements (197) von außerhalb der Spannvorrichtung (102) antreibbar ist.

3. Spannvorrichtung nach einem der Ansprüche 1 oder 2, **dadurch gekennzeichnet, dass** die Bewegungsvorrichtung (250) ein drehbares Betätigungselement (160) umfasst, durch dessen Drehung die Bewegung des mindestens einen Spannelements (197) antreibbar ist.

4. Spannvorrichtung nach einem der Ansprüche 1 bis 3, **dadurch gekennzeichnet, dass** die Bewegungsvorrichtung (250) ein Getriebe zum Umwandeln einer Drehbewegung in eine Linearbewegung des mindestens einen Spannelements (197) umfasst.

5. Spannvorrichtung nach Anspruch 4, **dadurch gekennzeichnet, dass** das Getriebe eine Gewindespindel (184) umfasst.

6. Spannvorrichtung nach einem der Ansprüche 1 bis 5, **dadurch gekennzeichnet, dass** die Bewegungsvorrichtung (250) ein Mitnehmerelement (211) zum synchronen Bewegen von zwei oder mehr Spannelementen (197) umfasst.

7. Spannvorrichtung nach einem der Ansprüche 1 bis 6, **dadurch gekennzeichnet, dass** jeder Spannnippelaufnahme (108) jeweils mindestens zwei Spannelemente (197) so zugeordnet sind, dass in der Arretierstellung der Spannelemente (197) Spannbereiche (202) beider Spannelemente (197) in die jeweilige Spannnippelaufnahme (108) eingreifen.

8. Spannvorrichtung nach Anspruch 7, **dadurch gekennzeichnet, dass** die Spannbereiche (202) der Spannelemente (197) in der Arretierstellung der Spannelemente (197) auf einander entgegengesetzten Seiten des in der Spannnippelaufnahme (108) aufgenommenen Spannnippels (102) angeordnet sind.

9. Spannvorrichtung nach einem der Ansprüche 1 bis 8, **dadurch gekennzeichnet, dass** mindestens ein Spannelement (197) mindestens zwei Spannbereiche (202a, 202b) aufweist, die in der Arretierstellung des Spannelements (197) in zwei verschiedene Spannnippelaufnahmen (108a, 108b) eingreifen.

10. Spannvorrichtung nach einem der Ansprüche 1 bis 9, **dadurch gekennzeichnet, dass** mindestens ein Spannelement (197) mindestens eine Ausnehmung (232) aufweist, welche benachbart zu einem Spannbereich (202) des Spannelements (197) angeordnet ist und in der Freigabestellung des Spannelements (197) im Bereich der jeweils zugeordneten Spannnippelaufnahme (108) angeordnet ist.

11. Spannvorrichtung nach Anspruch 10, **dadurch gekennzeichnet, dass** die Ausnehmung (232) sich ringförmig um das Spannelement (197) herum erstreckt.

12. Spannvorrichtung nach einem der Ansprüche 10 oder 11, **dadurch gekennzeichnet, dass** mindestens ein Spannelement (197) mindestens zwei Ausnehmungen (232a, 232b) aufweist, welche benachbart zu jeweils einem Spannbereich (202a, 202b) des Spannelements (197) angeordnet sind und in der Freigabestellung des Spannelements (197) im Bereich der jeweils zugeordneten Spannnippelaufnahme (108a, 108b) angeordnet sind.

13. Spannvorrichtung nach einem der Ansprüche 1 bis 12, **dadurch gekennzeichnet, dass** die Arretiervorrichtung (106) zwei oder mehr Spannelemente (197a, 197b, 197c, 197d) umfasst, deren Arretierrichtungen (222) im Wesentlichen parallel zueinander ausgerichtet sind.

14. Spannvorrichtung nach einem der Ansprüche 1 bis 13, **dadurch gekennzeichnet, dass** mindestens ein Spannelement (197) mindestens einen Führungsabschnitt (206) umfasst, der in einem Führungskanal (190) der Spannvorrichtung (100) geführt ist.

15. Spannvorrichtung nach Anspruch 14, **dadurch gekennzeichnet, dass** mindesten ein Spannbereich (202) mindestens eines Spannelements (197) zwischen einem Führungsabschnitt (206) des Spannelements (197) und einem Mitnehmerabschnitt (200) des Spannelements (197), an welchem ein Mitnehmerelement (211) der Bewegungsvorrichtung (250) an dem Spannelement (197) angreift, angeordnet ist.

## Claims

1. A clamping device for clamping at least one clamping stud (102) of a workpiece pallet (254) or a workpiece, comprising a locking device (106) for locking the clamping stud (102) in a clamping stud receptacle (108) of the clamping device (100), wherein the locking device (106) comprises at least one clamping element (197) having at least one clamping region (202), and wherein the clamping region (202) is engaged with the associated clamping stud (102) in a locking position of the clamping element (197) and is not engaged with the associated clamping stud (102) in a release position of the clamping element (197),
**characterised in that**
the locking device (106) comprises a moving device (250), by means of which at least one clamping element (197) can be moved from the release position into the locking position along a locking direction (222) which is not a radial direction of the associated clamping stud (102), and along a movement path laterally offset in relation to the radial direction of the clamping stud (102), and/or can be moved from the locking position into the release position along a release direction (224) which is not a radial direction of the associated clamping stud (102), and along a movement path which is laterally offset in relation to the radial direction of the clamping stud (102).

2. A clamping device according to claim 1, **characterised in that** the moving device (250) comprises a mechanical actuation element (160), by means of which the movement of the at least one clamping element (197) can be driven from outside the clamping device (102).

3. A clamping device according to any one of claims 1 or 2, **characterised in that** the moving device (250) comprises a rotatable actuation element (160), the rotation of which can drive the movement of the at least one clamping element (197).

4. A clamping device according to any one of claims 1 to 3, **characterised in that** the moving device (250) comprises a gearing mechanism for converting a rotary movement into a linear movement of the at least one clamping element (197).

5. A clamping device according to claim 4, **characterised in that** the gearing mechanism comprises a threaded spindle (184).

6. A clamping device according to any one of claims 1 to 5, **characterised in that** the moving device (250) comprises a driver element (211) for moving two or more clamping elements (197) synchronously.

7. A clamping device according to any one of claims 1 to 6, **characterised in that** each clamping stud receptacle (108) is associated with at least two clamping elements (197), such that clamping regions (202) of both clamping elements (197) engage in the relevant clamping stud receptacle (108) in the locking position of the clamping elements (197).

8. A clamping device according to claim 7, **characterised in that** the clamping regions (202) of the clamping elements (197), in the locking position of the clamping elements (197), are arranged on mutually opposed sides of the clamping stud (102) received in the clamping stud receptacle (108).

9. A clamping device according to any one of claims 1 to 8, **characterised in that** at least one clamping element (197) has at least two clamping regions (202a, 202b), which in the locking position of the clamping element (197) engage in two different clamping stud receptacles (108a, 108b).

10. A clamping device according to any one of claims 1 to 9, **characterised in that** the at least one clamping element (197) has at least one recess (232) which is arranged adjacently to a clamping region (202) of the clamping element (197) and in the release position of the clamping element (197) is arranged in the region of the associated clamping stud receptacle (108).

11. A clamping device according to claim 10, **characterised in that** the recess (232) extends annularly around the clamping element (197).

12. A clamping device according to either one of claims 10 or 11, **characterised in that** at least one clamping element (197) has at least two recesses (232a, 232b) which are arranged adjacently to one clamping region (202a, 202b) each of the clamping element (197) and in the release position of the clamping element (197) are arranged in the region of the respectively associated clamping stud receptacle (108a, 108b).

13. A clamping device according to any one of claims 1 to 12, **characterised in that** the locking device (106) comprises two or more clamping elements (197a, 197b, 197c, 197d), the locking directions (222) of which are oriented substantially parallel to one another.

14. A clamping device according to any one of claims 1 to 13, **characterised in that** at least one clamping element (197) comprises at least one guide portion (206) which is guided in a guide channel (190) of the clamping device (100).

15. A clamping device according to claim 14, **characterised in that** at least one clamping region (202) is arranged between a guide portion (206) of the clamping element (197) and a driver portion (200) of the clamping element (197), at which driver portion a driver element (211) of the moving device (250) acts on the clamping element (197).

## Revendications

1. Dispositif de serrage pour le serrage d'au moins un téton de serrage (102) d'une palette de pièce (254) ou d'une pièce, comprenant un dispositif d'arrêt (106) pour l'arrêt du téton de serrage (102) dans un logement de téton de serrage (108) du dispositif de serrage (100),
dans lequel le dispositif d'arrêt (106) comprend au moins un élément de serrage (197) avec au moins une zone de serrage (202) et
dans lequel la zone de serrage (202), dans une position d'arrêt de l'élément de serrage (197), est en prise avec le téton de serrage (102) associé et, dans une position de libération de l'élément de serrage (197), n'est pas en prise avec le téton de serrage (102) associé,
**caractérisé en ce**
**que** le dispositif d'arrêt (106) comprend un dispositif de déplacement (250) au moyen duquel au moins un élément de serrage (197) est mobile le long d'une direction d'arrêt (222) qui n'est pas une direction radiale du téton de serrage (102) associé, et le long d'une bande de déplacement décalée latéralement par rapport à la direction radiale du téton de serrage (102) de la position de libération à la position d'arrêt et/ou le long d'une direction de libération (224) qui n'est pas une direction radiale du téton de serrage (102) associé, et le long d'une bande de déplacement décalée latéralement par rapport à la direction radiale du téton de serrage (102) de la position d'arrêt à la position de libération.

2. Dispositif de serrage selon la revendication 1, **caractérisé en ce que** le dispositif de déplacement (250) comprend un élément d'actionnement (160) mécanique au moyen duquel le déplacement de l'au moins un élément de serrage (197) peut être entraîné depuis l'extérieur du dispositif de serrage (102).

3. Dispositif de serrage selon l'une quelconque des revendications 1 ou 2, **caractérisé en ce que** le dispositif de déplacement (250) comprend un élément d'actionnement (160) rotatif, par la rotation duquel le déplacement de l'au moins un élément de serrage (197) peut être entraîné.

4. Dispositif de serrage selon l'une quelconque des revendications 1 à 3, **caractérisé en ce que** le dispositif de déplacement (250) comprend un engrenage pour la conversion d'un mouvement rotatif en un mouvement linéaire de l'au moins un élément de serrage (197).

5. Dispositif de serrage selon la revendication 4, **caractérisé en ce que** l'engrenage comprend une broche filetée (184).

6. Dispositif de serrage selon l'une quelconque des revendications 1 à 5, **caractérisé en ce que** le dispositif de déplacement (250) comprend un élément d'entraînement (211) pour le déplacement synchrone de deux éléments de serrage (197) ou plus.

7. Dispositif de serrage selon l'une quelconque des revendications 1 à 6, **caractérisé en ce qu'**à chaque logement de téton de serrage (108) sont associés respectivement au moins deux éléments de serrage (197) de sorte que, dans la position d'arrêt des éléments de serrage (197), des zones de serrage (202) des deux éléments de serrage (197) viennent en prise avec le logement de téton de serrage (108) respectif.

8. Dispositif de serrage selon la revendication 7, **caractérisé en ce que** les zones de serrage (202) des éléments de serrage (197) sont disposées, dans la position d'arrêt des éléments de serrage (197), sur des côtés opposés l'un à l'autre du téton de serrage (102) reçu dans le logement de téton de serrage (108).

9. Dispositif de serrage selon l'une quelconque des revendications 1 à 8, **caractérisé en ce qu'**au moins un élément de serrage (197) présente au moins deux zones de serrage (202a, 202b) qui viennent en prise, dans la position d'arrêt de l'élément de serrage (197), avec deux logements de téton de serrage (108a, 108b) différents.

10. Dispositif de serrage selon l'une quelconque des revendications 1 à 9, **caractérisé en ce qu'**au moins un élément de serrage (197) présente au moins un évidement (232) qui est disposé de manière adjacente à une zone de serrage (202) de l'élément de serrage (197) et disposé, dans la position de libération de l'élément de serrage (197), dans la zone du logement de téton de serrage (108) associée respectivement.

11. Dispositif de serrage selon la revendication 10, **caractérisé en ce que** l'évidement (232) s'étend en forme d'anneau autour de l'élément de serrage (197).

12. Dispositif de serrage selon l'une quelconque des revendications 10 ou 11, **caractérisé en ce qu'**au moins un élément de serrage (197) présente au moins deux évidements (232a, 232b) qui sont disposés de manière adjacente à respectivement une zone de serrage (202a, 202b) de l'élément de serrage (197) et disposés, dans la position de libération de l'élément de serrage (197), dans la zone du logement de téton de serrage (108a, 108b) associé respectivement.

13. Dispositif de serrage selon l'une quelconque des revendications 1 à 12, **caractérisé en ce que** le dispositif d'arrêt (106) comprend deux éléments de serrage (197a, 197b, 197c, 197d) ou plus dont les directions d'arrêt (222) sont orientées sensiblement parallèlement les unes aux autres.

14. Dispositif de serrage selon l'une quelconque des revendications 1 à 13, **caractérisé en ce qu'**au moins un élément de serrage (197) comprend au moins une section de guidage (206) qui est guidée dans un canal de guidage (190) du dispositif de serrage (100).

15. Dispositif de serrage selon la revendication 14, **caractérisé en ce qu'**au moins une zone de serrage (202) d'au moins un élément de serrage (197) est disposée entre une section de guidage (206) de l'élément de serrage (197) et une section d'entraînement (200) de l'élément de serrage (197) au niveau de laquelle un élément d'entraînement (211) du dispositif de déplacement (250) agit sur l'élément de serrage (197).
